# EUROPÄISCHE PATENTSCHRIFT

(11) **EP 2 703 716 B1**
(45) Veröffentlichungstag und Bekanntmachung des Hinweises auf die Patenterteilung: **06.04.2016**
(21) Anmeldenummer: 12007061.0
(22) Anmeldetag: 11.10.2012
(51) Int. Cl.: F23G 7/06, F23J 15/02, F23L 7/00, F23J 15/08

(54) **Erwärmung eines Prozessabgases**
Heating of a process exhaust gas
Chauffage d'un gaz d'échappement de processus

(30) Priorität: 28.08.2012 DE 102012017107
(43) Veröffentlichungstag der Anmeldung: 05.03.2014
(73) Patentinhaber: Linde Aktiengesellschaft, 80331 München (DE)
(72) Erfinder: Koeder, Horst, 06258 Schkopau (DE)
(74) Vertreter: Gellner, Bernd

(56) Entgegenhaltungen:
- EP-A1- 1 291 069
- EP-A2- 0 568 104
- DE-A1- 4 139 512
- US-A1- 2002 170 429
- US-A1- 2007 154 854
- US-A1- 2008 145 281

## Beschreibung

Die Erfindung betrifft ein Verfahren zur Erwärmung eines Prozessabgases eines thermischen Prozesses, eine entsprechende Vorrichtung und ein Pyrolyseverfahren.

### Stand der Technik

Bei einer Reihe thermischer Prozesse werden Prozessabgase erzeugt, die nacherwärmt werden können oder sollten.

So sind beispielsweise Verfahren zur Herstellung von unterschiedlichen Gasgemischen aus festem organischem Einsatzmaterial, auch kurz als Vergasungsverfahren bezeichnet, bekannt. Beispielsweise können als Einsatzmaterial Biomasse oder Wertstoffe zum Einsatz kommen. Als Biomasse können Alt- und Waldrestholz oder sogenannte Energiehölzer, aber auch Agrarreststoffe wie Stroh oder Häcksel verwendet werden. Wertstoffe umfassen beispielsweise Autoreifen und Kunststoffschnipsel.

Verfahren und Anlagen zur Vergasung von festem, organischem Einsatzmaterial sind beispielsweise aus EP 0 745 114 B1, DE 41 39 512 A1 und DE 42 09 549 A1 bekannt. Die Umsetzung von Biomasse wird ferner bei Brown, Robert C. (Hrsg.): Thermochemical Processing of Biomass - Conversion into Fuels, Chemicals and Power. Hoboken: John Wiley & Sons, 2011, ausführlich behandelt.

Durch eine Vergasung von organischem Einsatzmaterial zu Synthesegas und nachgeschaltete Verfahrensschritte (beispielsweise in sogenannten Biomass-to-Liquids-Verfahren, BTL) kann z.B. synthetischer Biokraftstoff gewonnen werden, der in seinen physikalischen und chemischen Eigenschaften den bekannten Gas-to-Liquids-(GTL-) und Coal-to-Liquids-(CTL-)Kräftstoffen ähnlich ist.

Entsprechend erhaltene gasförmige Produkte können jedoch auch beispielsweise zur Befeuerung von Ringschachtöfen in Kalkwerken und/oder als Synthesegas bei der Karbidherstellung verwendet werden.

Nachteilig bei bekannten Verfahren, beispielsweise der Pyrolyse, ist häufig der Austrag fester und/oder flüssiger Bestandteile aus dem Verfahren, die in nachfolgenden Reinigungsprozessen Störungen verursachen können. Es ist daher bekannt, entsprechende Prozessabgase zu erwärmen. Bisherige Verfahren erweisen in diesem Zusammenhang jedoch als häufig als unbefriedigend, weil sie beispielsweise nur in engen Bereichen regelbar und daher nicht prozesssicher sind.

Aufgabe vorliegender Erfindung ist es daher, verbesserte Möglichkeiten zur Erwärmung von Prozessabgasen thermischer Prozesse anzugeben.

### Offenbarung der Erfindung

Die Erfindung schlägt ein Verfahren zur Erwärmung eines Prozessabgases eines thermischen Prozesses, eine entsprechende Vorrichtung und ein Pyrolyseverfahren mit den Merkmalen der unabhängigen Patentansprüche vor. Bevorzugte Ausgestaltungen sind Gegenstand der Unteransprüche und der nachfolgenden Beschreibung.

### Vorteile der Erfindung

Die Erfindung betrifft ein Verfahren zur Erwärmung eines Prozessabgases nach Anspruch 1. Der zumindest eine Brennstoff wird vorzugsweise zu Beginn des Verfahrens extern zugeführt, zu späteren Zeitpunkten unterhält sich die Verbrennung vorzugsweise selbst, weil in dem Prozessabgas vorhandene brennbare Gase als wenigstens ein Brennstoff verbrannt werden.

Durch die Verwendung von sauerstoffreichen Gasgemischen zur Verbrennung des wenigstens einen Brennstoffs kann insbesondere der Heizwert von Prozessabgasen, die zur nachfolgenden Nutzung in Verbrennungsprozessen bestimmt sind, beispielsweise von Prozessabgasen der genannten Pyrolyseprozesse, aufrechterhalten werden. Es ergibt sich insbesondere ein Vorteil gegenüber der Verwendung von Luft, weil weniger oder kein zusätzlicher Stickstoff eingetragen wird. Dies verringert auch die Bildung von Stickoxiden. Durch die Verwendung sauerstoffreicher Gasgemische kann ferner die Verbrennung des zumindest einen Brennstoffs deutlich stabilisiert werden. Auch die Temperatur, die bei der Verbrennung erzeugt wird, und damit die Temperatur, auf die ein entsprechendes Prozessabgas aufgeheizt werden kann, lässt sich in sehr viel größerem Umfang regeln als bei der Verwendung von Luft. Ein entsprechendes Verfahren ist damit sehr viel prozesssicherer.

Durch das erfindungsgemäße Verfahren lässt sich der Gesamtkohlenstoffgehalt in Abgasen aus Feuerungen, beispielsweise aus Feuerungen, in denen die erwähnten Prozessabgase eingesetzt werden, und der Feststoff- oder Flüssigkeitsgehalt entsprechender Prozessabgase signifikant reduzieren. Weiterhin ermöglicht die Abgaserhitzung, beispielsweise bei Elektrofiltern, deren Abscheidegrad sich in herkömmlichen Verfahren häufig als unzureichend erweist, eine bessere Filtervvirkung zu erreichen. Der Widerstand der Staubschicht in derartigen Elektrofiltern ist von der Temperatur abhängig, so dass die Filter bei höherer Temperatur effektiver arbeiten.

Die Reduzierung der festen und flüssigen Bestandteile in dem Prozessabgas erfolgt durch eine Überführung in den gasförmigen Aggregatzustand durch chemische Umsetzung oder Verdampfung. Damit kommt es nicht mehr zu Störungen in den nachfolgenden Reinigungsprozessen.

Die verbesserte Temperatureinbringung verbessert den Abscheidegrad von nachgeschalteten Elektrofiltern, und zwar nicht nur aufgrund der Reduzierung der festen und flüssigen Bestandteile im Prozessabgas, sondern auch aufgrund einer Änderung der Strömungsdynamik und des elektrischen Widerstands der im Elektrofilter erzeugten Staubschicht. Diese Größen sind bekanntermaßen temperaturabhängig, so dass sich bei erhöhter Temperatur, wie sie erfindungsgemäß erzielt werden kann, auch ein verbesserter Abscheidegrad erzielen lässt.

Insbesondere bei Pyrolyseprozessen, welche einen Niedertemperaturpyrolyseschritt in einem sogenannten Niedertemperaturvergaser umfassen, sind Prozessabgase häufig mit Teer gesättigt, der beim Abkühlen der Prozessabgase auskondensieren kann. Dies wird durch die Erwärmung, und insbesondere die erfindungsgemäße Erwärmung unter Verwendung eines sauerstoffreichen Gasgemischs, sicher vermieden. Insgesamt werden durch den Einsatz des erfindungsgemäßen Verfahrens Taupunktunterschreitungen, beispielsweise in Abgasführungssystemen, und hierdurch verursachte Korrosion und teure Wartungsarbeiten reduziert.

Insbesondere bei der Verwendung der unten erläuterten Vorrichtung, jedoch auch bereits durch die verfahrensseitig vorgeschlagenen Maßnahmen, lässt sich eine bessere Vermischung der Prozessabgase erzielen, so dass deren Strähnigkeit reduziert wird und eine Vergleichmäßigung ihrer Temperatur möglich ist. In entsprechender Weise gilt dies auch für die Vergleichmäßigung der chemischen Zusammensetzung entsprechender Prozessabgase. Herkömmlicherweise ist die Mischung der Prozessabgase hingegen häufig unzureichend, da die Flammengeschwindigkeit und der Austrittsimpuls der Flammen, die in den Brennern erzeugt werden, zu niedrig sind. Es kommt damit zu unerwünschten Konzentrationsunterschieden in den Prozessabgasen.

Zur Verbrennung verwendete Brenner können durch den hohen Sauerstoffgehalt des verwendeten sauerstoffreichen Gasgemischs sehr viel sicherer gezündet werden. Hierdurch können sich beispielsweise keine zündfähigen Gemische in den verwendeten Rohrleitungssystemen mehr bilden. Dies verbessert die Sicherheit.

Wie erwähnt, kommt es bei Einsatz des erfindungsgemäßen Verfahrens zu einer Reduzierung des Gesamtkohlenstoffgehalts in einem entsprechenden Prozessabgas, insbesondere dann, wenn die verwendeten Brenner überstöchiometrisch gefahren werden. Wird entsprechendes Prozessabgas intern, d.h. in einer entsprechenden Brennkammer, rezirkuliert, ergibt dies besondere Vorteile in Verbindung mit einer Erhöhung der Verweilzeit.

Ferner ergibt sich durch die erfindungsgemäßen Maßnahmen auch eine Reduzierung der Dichte der Prozessabgase, was einen verbesserten Saugzug der angeschlossenen Kamine bewirkt. Der verbesserte Saugzug ist insbesondere dann vorteilhaft, wenn an einem Kamin mehrere Öfen angeschlossen sind und einige hiervon, beispielsweise wegen Wartungsarbeiten, ausfallen.

Je nach den Erfordernissen der Erwärmung und/oder der Prozessstabilität und/oder der weiteren erläuterten Ziele kann im Rahmen des erfindungsgemäßen Verfahrens ein sauerstoffreiches Gasgemisch verwendet werden, das einen Sauerstoffgehalt von wenigstens 30 Volumenprozent, 40 Volumenprozent, 50 Volumenprozent, 60 Volumenprozent, 70 Volumenprozent, 80 Volumenprozent, 90 Volumenprozent oder 95 Volumenprozent aufweist. Alternativ kann auch zumindest technisch "reiner" Sauerstoff verwendet werden, der ebenfalls unter den Begriff "sauerstoffreiches Gasgemisch" fallen soll. Entsprechende sauerstoffreiche Gasgemische können beispielsweise unter Verwendung von Luftzerlegungsanlagen hergestellt werden, die besonders effizient betrieben werden können, wenn kein vollständig reiner Sauerstoff erzeugt werden soll. Beispielsweise können in diesem Zusammenhang Luftzerlegungsanlagen mit sogenannten Mischsäulen zum Einsatz kommen.

Als der zumindest eine Brennstoff wird Schwer- oder Heizöl, Methan, Ethan, Butan und/oder Propan und/oder ein entsprechendes Gasgemisch wie Erdgas verwendet. Flüssige Brennstoffe werden mit Luft oder Wasserdampf zerstäubt. Methan kann beispielsweise durch Verfahren, die in einer entsprechenden Anlage ohnehin durchgeführt werden, beispielsweise durch Steamcracken, erzeugt werden. Auch Ethan, Butan und/oder Propan und/oder die entsprechenden Gemische und/oder Erdgas stellen kostengünstige Brennstoffe dar, die erfindungsgemäß zum Einsatz kommen können.

Ein entsprechendes Verfahren kann, wie erwähnt, umfassen, zunächst extern Brennstoff zuzuführen. Wenn die Temperatur des Prozessabgases die Zündtemperatur der darin enthaltenen brennbaren Gase erreicht hat, wird die externe Zufuhr von Brennstoff unterbunden. Der Brenner wird dann nur noch mit Sauerstoff bzw. dem sauerstoffreichen Gasgemisch gespeist. Der in dem Prozessabgas enthaltene Brennstoff in Form brennbarer Gase reicht zur Aufrechterhaltung einer stabilen Verbrennung aus. Hierdurch kann extern zugeführter Brennstoff, beispielsweise Erdgas und/oder Propan, eingespart werden. Bei Prozessabgasen, die keinen öder zu wenig entsprechenden Brennstoff enthalten, kann auch eine kontinuierliche Verbrennung extern zugeführten Brennstoffs erfolgen. Auch Zwischenstufen sind möglich. Enthält ein zu erwärmendes Prozessabgas beispielsweise nur geringe Mengen brennbarer Gase, kann zu Beginn, wie zuvor, extern Brennstoff zugeführt werden. Wenn die Temperatur des Prozessabgases die Zündtemperatur der brennbaren Gase erreicht hat, wird die externe Zufuhr von Brennstoff jedoch nicht vollständig unterbunden sondern nur reduziert.

Vorteilhafterweise wird in einem entsprechenden Verfahren der zumindest eine Brennstoff zusammen mit dem sauerstoffreichen Gasgemisch unter Verwendung in die Brennkammer geführter Brenner, vorzugsweise sogenannter Brennerlanzen, verbrannt. Diese werden unter Bezugnahme auf die erfindungsgemäße Vorrichtung noch näher erläutert.

In einem entsprechenden Verfahren erfolgt vorteilhafterweise eine Erwärmung des Prozessabgases auf eine Temperatur von 200°C bis 1.700 °C, beispielsweise auf eine Temperatur von 400 bis 800 °C. Auf diese Weise wird eine Temperatur erreicht, bei der der in dem Prozessabgas enthaltene Brennstoff zündet. Die Verbrennung kann dann, wie erwähnt, ausschließlich durch Einspeisung des sauerstoffhaltigen Gasgemischs aufrechterhalten werden.

Die Verbrennung wird vorzugsweise bei einem Absolutdruck durchgeführt, der 0,1 bis 11 bar beträgt. Erfolgt die Verbrennung bei Überdruck, sorgt dies für höhere Energiedichten und damit für eine effektivere Erwärmung des Prozessabgases. Die Drücke unterhalb von 1 bar werden beispielsweise durch den Saugzug eines Kamins erzielt.

Eine Vorrichtung, welche nicht zum Schutzumfung gehört, ist zur Durchführung eines Verfahrens wie zuvor erläutert eingerichtet. Sie profitiert daher von den erläuterten Vorteilen in gleicher Weise.

Insbesondere weist die Vorrichtung, wie bereits erwähnt, wenigstens einen in die Brennkammer geführten Brenner auf, der zumindest mit dem sauerstoffreichen Gasgemisch und dem zumindest einen Brennstoff beschickbar ist.

Vorteilhafterweise sind entsprechende Brenner auch mit zumindest einem Inertgas oder in Inertgasgemisch, insbesondere Stickstoff, beschickbar. Hierdurch können der oder die Brenner gespült werden. Die Inertgasspülung kann zur Kühlung und Freihaltung der Brennerdüsen und zur Absicherung eines sauerstofffreien Prozessabgases verwendet werden. Jeder nicht genutzte Sauerstoffstrang zum Brenner kann permanent mit Stickstoff oder einem anderen Inertgas gespült werden, so dass sich kein zündfähiges Gemisch durch Austreten von Sauerstoff aus dem Pyrolysegasstrom bilden kann. Auch kann beispielsweise nach Fehlzündungen ein Brenner so lange mit Inertgas gespült werden, bis die untere Explosionsgrenze unterschritten (beim Anfahren in Luft) oder die obere Explosionsgrenze (im normalen Betrieb) überschritten wird.

Als Brenner werden vorteilhafterweise Brennerlanzen verwendet, bei denen zumindest das sauerstoffreiche Gasgemisch und der zumindest eine Brennstoff koaxial zuführbar sind. Ein erster umhüllender Ringspalt kann dabei für Brenngas und ein zweiter umhüllender Ringspalt für Sauerstoff oder das sauerstoffhaltige Gemisch verwendet werden. Zumindest ein vorzugsweise innenliegender Kanal kann wahlweise für sogenannten Zündsauerstoff oder das Inertgas, insbesondere Stickstoff, verwendet werden. Sämtliche Kanäle, insbesondere aber jene, die Sauerstoff oder ein sauerstoffhaltiges Gasgemisch führen, können vorteilhafterweise mit Stickstoff gespült werden. Entsprechende Brennerlanzen erlauben eine besonders zuverlässige Erzeugung von Brennerflammen mit hoher Impulsenergie.

In einer entsprechenden Vorrichtung sind vorteilhafterweise mehrere, insbesondere wenigstens drei, gleichmäßig um eine durch eine Strömungsrichtung des Prozessabgases in der Brennkammer definierte Achse angeordnete Brenner vorgesehen. Die Brennkammer kann in Form einer sogenannten Muffel ausgebildet sein. Eine Muffel stellt eine Erweiterung eines Abgaskanals dar, die vorzugsweise mit feuerfestem Material ausgekleidet ist. Eine derartige Muffel ist vorzugsweise ein Teil des Gasabzugssystems, welches oberhalb eines Reaktors oder Ofens zur Erzeugung der Prozessabgase angeschlossen ist. Die Achse, die durch die Strömungsrichtung des Prozessabgases in der Brennkammer definiert ist, verläuft in gängigen Vorrichtungen vertikal.

Vorteilhafterweise sind wenigstens drei Brenner vorgesehen, deren Längsachsen in einem Winkel von 10° bis 90°, insbesondere von 25° bis 35° zu der Achse ausgerichtet sind. Ein spitzer Winkel bezeichnet dabei einen Winkel zwischen einer Einströmrichtung des Prozessabgases und der Einströmrichtung des zumindest einen Brennstoffs aus der Brennerdüse. Die Brenner sind ferner auf das Zentrum der Brennkammer ausgerichtet. Sie können sich gegenseitig zünden. Ein oder mehrere, vorzugsweise alle, Brenner können durch Infrarot- oder Ultraviolettsonden überwacht werden und können jeweils eine elektrische Zündvorrichtung aufweisen. Die Zündung erfolgt vorzugsweise in einer Mischzone von Zündsauerstoff und Brenngas.

Durch die vorgeschlagene Anordnung wird insbesondere ein ausreichend hoher Impuls zum Mischen der Prozessabgase sichergestellt, wobei der auf die Fläche bezogene spezifische Gesamtimpuls der Brenner mindestens doppelt so hoch ausgebildet wird, wie jener des Prozessabgasstroms. Dies verringert dessen Strähnigkeit.

Die Winkel zwischen den Brennern ergeben sich aus ihrer Anzahl. Sind beispielsweise drei Brennerlanzen vorgesehen, die gleichmäßig um den Umfang einer entsprechenden Muffel verteilt sind, handelt es sich um 3 120° = 360°.

Wie erwähnt, besitzen die erzeugten Flammen einen relativ hohen Austrittsimpuls. Die Flammentemperatur wird stark reduziert, weil eine hohe Einmischung des Prozessabgasstroms in die Flamme erfolgt. Durch die hohe Einmischung kann jedoch der gesamte Prozessgasstrom gleichmäßig und schnell auf die gewünschten Temperaturen gebracht werden. Die Hauptreaktion des sauerstroffreichen Gases bzw. des darin enthaltenen Sauerstoffs mit dem Prozessabgas findet somit in der Brennkammer statt.

Durch die in die Muffel geführten Brenner wird auch eine Beschleunigung des Prozessabgases erzielt. Durch die Erweiterung des Prozessabgaskanals in der Brennkammer wird ein Druckverlust durch die Erhitzung des Prozessgases reduziert.

Ein Pyrolyseverfahren, bei dem ein festes organisches Einsatzmaterial zumindest teilweise zu einem Prozessabgas umgesetzt wird, und in dem das Prozessabgas mittels eines zuvor erläuterten Verfahrens und/oder einer entsprechenden Vorrichtung erwärmt wird, ist nicht Teil der Erfindung. Vorteilhafterweise wird hierbei als Prozessabgas ein Pyrolyseschwelgas und/oder ein Synthesegas erzeugt und erwärmt. Auch hierbei ergeben sich die erläuterten Vorteile.

Die Erfindung ist nachfolgend unter Bezugnahme auf die beigefügten Zeichnungen weiter erläutert, welche eine bevorzugte Ausführungsform der Erfindung zeigen.

### Kurze Beschreibung der Zeichnungen

- Figur 1: zeigt eine Brennkammer zur Durchführung des Verfahrens nach Anspruch 1.
- Figur 2: zeigt einen Brenner zur Durchführung des Verfahrens nach Anspruch 1.

### Ausführungsformen der Erfindung

In den Figuren sind gleiche bzw. einander entsprechende Elemente mit identischen Bezugszeichen angegeben. Auf eine wiederholte Erläuterung wird der Übersichtlichkeit halber verzichtet.

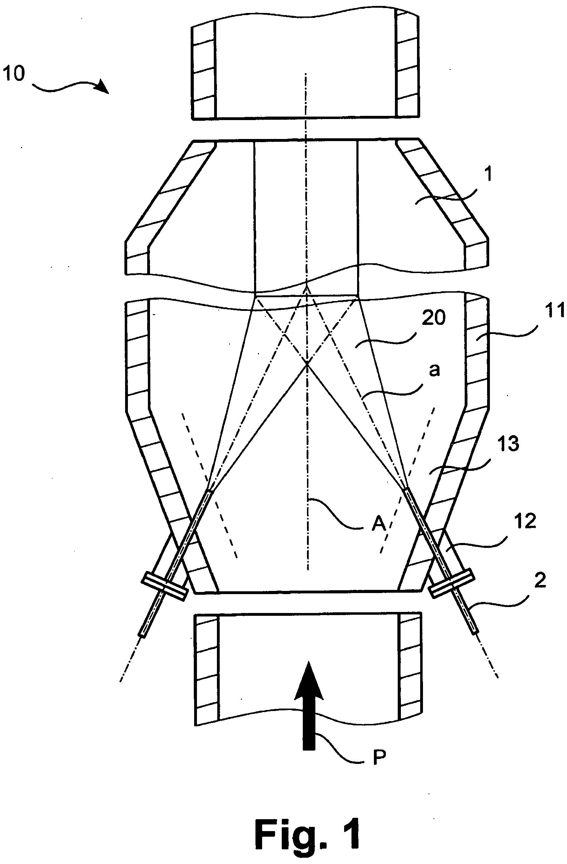

In Figur 1 ist eine Vorrichtung zur Durchführung der Erfindung schematisch dargestellt und insgesamt mit 10 bezeichnet. Die Vorrichtung umfasst eine Brennkammer 1, die, wie erläutert, beispielsweise als Muffel ausgebildet sein kann und einen zylindrisch erweiterten Rohrabschnitt mit feuerfest ausgebildeten Wänden 11 darstellt. Ein entsprechendes auskleidendes Material, beispielsweise Aluminium- oder Zirkonoxid oder Schamotte ist nur abschnittsweise gestrichelt dargestellt und mit 13 bezeichnet.

Die Brennkammer 1 ist vorteilhafterweise direkt oberhalb eines Prozessreaktors angeordnet, in welchem ein Prozessabgas P erzeugt wird. Das Prozessabgas P wird, beispielsweise von unten, der Brennkammer 1 zugeführt, was durch einen entsprechenden Pfeil veranschaulicht ist. Eine hier vertikale Achse A entspricht der Strömungsrichtung des Prozessabgases P in der Brennkammer.

In die Brennkammer 1 sind über entsprechende Führungen 12 Brenner 2 geführt, welche, wie erläutert, als Brennerlanzen ausgebildet sein können, und denen ein Brenngas und das erläuterte sauerstoffreiche Gasgemisch zugeführt werden können. Das distale Ende Brenner schließt jeweils mit dem Feuerfestmaterial 13 ab oder ist leicht gegenüber diesem zurückgesetzt. In der Darstellung der Figur 1 sind zwei Brenner in der Papierebene dargestellt. Werden, wie es erfindungsgemäß ebenfalls vorgesehen sein kann, drei Brenner verwendet, ist nur einer dieser Brenner jeweils in der Papierebene angeordnet. Die Brenner sind mit ihren Längsachsen a in Richtung der zuvor erläuterten Achse A ausgerichtet und in einem Winkel, hier 25°, zu dieser geneigt. Wie erläutert, können auch andere Winkel vorgesehen sein. Durch die Brenner 2 wird eine hier stark schematisiert dargestellte Flamme 20 erzeugt, mit welcher das Prozessabgas P aufgeheizt werden kann. Die Brennkammer kann beispielsweise eine maximale lichte Weite von 10 bis 900 cm, beispielsweise 200 cm, aufweisen, der Innendurchmesser des darüber und darunter angeordneten Abgaskanals ist entsprechend geringer. Die Gesamthöhe der Brennkammer kann beispielsweise 25 bis 2250 cm, beispielsweise 500 cm, betragen.

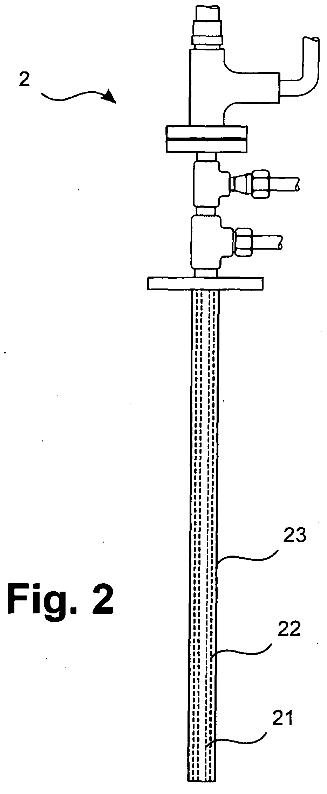

In Figur 2 ist ein als Brennerlanze ausgebildeter Brenner schematisch in einer Teilschnittansicht dargestellt und insgesamt mit 2 bezeichnet.

Er ist im Wesentlichen in Form konzentrisch angeordneter Rohre 21, 22, 23 ausgebildet. In einem durch das Rohr 21 gebildeten inneren Kanal wird Zündsauerstoff zugeführt. Wahlweise kann in diesem inneren Kanal auch Spülstickstoff eingespeist werden. Ein umgebendes Rohr 22 definiert einen Ringspalt um das innere Rohr 21. In den ersten umhüllenden Ringspalt kann Brenngas eingespeist werden. Ein zweites umhüllendes Rohr 23 definiert einen zweiten Ringspalt. In dieses zweite umhüllende Rohr 23 kann das sauerstoffreiche Gasgemisch und auch Spülstickstoff eingespeist werden.

In einem hinteren Bereich des Brenners 2, in der Figur 2 oben dargestellt, sind entsprechende Anschlüsse für diese Gase bzw. Gasgemische stark schematisiert dargestellt. Der Brenner kann beispielsweise eine Gesamtlänge von ca. 1,5 m aufweisen. Der Abschnitt mit den konzentrisch angeordneten Rohren 21, 22, 23 ist beispielsweise ca. 80 cm lang. Dies ermöglicht eine sichere Führung in eine Brennkammer 1, auch wenn diese mit entsprechendem Feuerfestmaterial ausgekleidet ist. Der Brenner 2 kann nicht dargestellte Zünd- und/oder Überwachungseinrichtungen aufweisen.

## Patentansprüche

1. Verfahren zur Erwärmung eines Prozessabgases (P) eines Pyrolyseprozesses, bei dem das Prozessabgas (P) durch eine Brennkammer (1) geführt wird, in welcher durch Verbrennung zumindest eines Brennstoffs (F) Wärme erzeugt wird, **dadurch gekennzeichnet, dass** die Brennkammer als Erweiterung eines Abgaskanals ausgeführt ist, dass mehrere gleichmäßig um eine durch die Strömungsrichtung des Prozessabgases in der Brennkammer definierte Achse angeordnete Brenner vorgesehen sind, wobei als der zumindest eine Brennstoff (F) Schwer- oder Heizöl, Methan, Ethan, Butan, Propan und/oder Erdgas und/oder entsprechende Gemische mit einem sauerstoffreichen Gasgemisch (0) verbrannt werden, das einen Sauerstoffgehalt von wenigstens 25 Volumenprozent aufweist.

2. Verfahren nach Anspruch 1, bei dem das sauerstoffreiche Gasgemisch (0) einen Sauerstoffgehalt von wenigstens 30, 40, 50, 60, 70, 80, 90 oder 95 Volumenprozent aufweist oder zumindest technisch reinen Sauerstoff darstellt.

3. Verfahren nach einem der vorstehenden Ansprüche, bei dem als der zumindest eine Brennstoff (F) zumindest zeitweise zumindest eine gasförmige Komponente des Prozessabgases (P) verwendet wird.

4. Verfahren nach einem der vorstehenden Ansprüche, bei dem eine Erwärmung des Prozessabgases (P) auf eine Temperatur von 200 bis 1.700 °C erfolgt.

## Claims

1. Method for heating a process exhaust gas (P) of a pyrolysis process, in which the process exhaust gas (P) is passed through a combustion chamber (1), in which heat is generated by combustion of at least one fuel (F), **characterized in that** the combustion chamber is designed as an extension of an exhaust gas duct, **in that** multiple burners are provided, arranged uniformly around an axis defined by the direction of flow of the process exhaust gas in the combustion chamber, wherein heavy oil or heating oil, methane, ethane, butane, propane and/or natural gas and/or corresponding mixtures with an oxygen-rich gas mixture (O) that has an oxygen content of at least 25 percent by volume are burned as the at least one fuel (F).

2. Method according to Claim 1, in which the oxygen-rich gas mixture (O) has an oxygen content of at least 30, 40, 50, 60, 70, 80, 90 or 95 percent by volume or represents at least technically pure oxygen.

3. Method according to either of the preceding claims, in which at least one gaseous component of the process exhaust gas (P) is used at least for a time as the at least one fuel (F).

4. Method according to one of the preceding claims, in which a heating of the process exhaust gas (P) is performed to a temperature of 200 to 1700°C.

## Revendications

1. Procédé pour chauffer un gaz d'échappement de processus (P) d'un processus de pyrolyse, dans lequel le gaz d'échappement de processus (P) est guidé à travers une chambre de combustion (1) dans laquelle de la chaleur est produite par combustion d'au moins un combustible (F), **caractérisé en ce que** la chambre de combustion est réalisée sous forme d'élargissement d'un canal de gaz d'échappement, **en ce que** plusieurs brûleurs disposés uniformément autour d'un axe défini par la direction d'écoulement du gaz d'échappement de processus dans la chambre de combustion sont prévus, l'au moins un combustible brûlé (F) étant du fioul lourd, du fioul domestique, du méthane, de l'éthane, du butane, du propane et/ou du gaz naturel et/ou des mélanges correspondants avec un mélange de gaz riche en oxygène (0) qui présente une teneur en oxygène d'au moins 25 % en volume.

2. Procédé selon la revendication 1, dans lequel le mélange de gaz riche en oxygène (O) présente une teneur en oxygène d'au moins 30, 40, 50, 60, 70, 80, 90 ou 95 % en volume ou constitue de l'oxygène au moins techniquement pur.

3. Procédé selon l'une quelconque des revendications précédentes, dans lequel on utilise en tant qu'au moins un combustible (F) au moins temporairement au moins une composante gazeuse du gaz d'échappement de processus (P).

4. Procédé selon l'une quelconque des revendications précédentes, dans lequel un chauffage du gaz d'échappement de processus (P) a lieu à une température de 200 à 1700°C.
